# EUROPÄISCHE PATENTSCHRIFT

(11) **EP 2 429 783 B1**
(45) Veröffentlichungstag und Bekanntmachung des Hinweises auf die Patenterteilung: **07.10.2015**
(21) Anmeldenummer: 10721959.4
(22) Anmeldetag: 04.05.2010
(51) Int. Cl.: B27B 5/29, B23D 45/04

(54) **KAPPSÄGE**
CIRCULAR CROSS-CUT SAW
SCIE PENDULAIRE

(30) Priorität: 11.05.2009 DE 102009020717
(43) Veröffentlichungstag der Anmeldung: 21.03.2012
(73) Patentinhaber: Weusthof, Gerhard, 48480 Schapen (DE)
(72) Erfinder: Weusthof, Gerhard, 48480 Schapen (DE)
(74) Vertreter: Hübsch, Dirk
(86) Internationale Anmeldenummer: PCT/EP2010/002724
(87) Internationale Veröffentlichungsnummer: WO 2010/130355

(56) Entgegenhaltungen:
- EP-A2- 2 130 632
- DE-A1- 3 119 573
- GB-A- 2 270 031

## Beschreibung

Die Erfindung betrifft eine Kappsäge, insbesondere eine Kapp- und Gehrungssäge gemäß dem Oberbegriff des Anspruchs 1. Eine solche Kappsäge ist aus DE 3119573 A1 bekannt.

Mit einer Kappsäge lassen sich Werkstücke auf einem Auflagetisch zuschneiden. Mit einer Kapp- und Gehrungssäge lassen sich Werkstücke, insbesondere Werkstückstangen, in einem vom rechten Winkel abweichenden Winkel - dem Gehrungswinkel - zuschneiden. An einem Arm ist oberhalb des Auflagetisches eine Sägevorrichtung mit einem rotierbar angeordneten Sägeblatt zum Sägen des Werkstückes angeordnet. Der Arm ist bei einer Gehrungssäge funktional wirksam an einem Drehmittel um eine Hochachse schwenkbar gelagert. Durch das Schwenken des Arms mit dem Drehmittel ist der Gehrungswinkel einstellbar. Ferner ist vzw. der Arm um eine Gehrungsachse schwenkbar, wobei sich die Gehrungsachse im wesentlichen senkrecht zur Schwenkachse, nämlich in einer Werkstückebene bzw. Schnittebene erstreckt. Zwischen dem Arm und dem Drehmittel kann dazu ein feststellbares Schwenkgelenk vorgesehen sein. Nachdem ggf. der Gehrungswinkel eingestellt ist, kann das Werkstück mit der Sägevorrichtung gekappt bzw. durchgesägt werden, wozu die Sägevorrichtung mit einer Kappbewegung nach unten absenkbar ist.

In einer oberen Stellung der Sägevorrichtung ist das Sägeblatt durch eine Pendelschutzhaube verdeckt. Die Kappsäge weist ferner ein Schwenkmechanismus auf, so dass die Kappbewegung der Sägevorrichtung mit der Schwenkbewegung der Pendelschutzhaube derart gekoppelt ist, dass die Pendelschutzhaube durch Herabschwenken der Sägevorrichtung offenbar und durch Heraufschwenken der Sägevorrichtung schließbar ist.

Aus der DE 60307557 T2 ist eine Kappsäge mit einem Auflagetisch, mit einem schwenkbar am Auflagetisch angeordneten Lagerblock und mit einem schwenkbar am Lagerblock angeordneten Arm bekannt. Der Arm trägt eine Sägevorrichtung mit einem Motorgehäuse, mit einem im Motorgehäuse angeordneten Motor, mit einem vom Motor angetriebenen Sägeblatt, mit einer Blattschutzhaube, die einen oberen Teil des Sägeblatts abdeckt, und mit einer Pendelschutzhaube, die drehbar bzw. schwenkbar an der Blattschutzhaube angebracht ist, um einen unteren Teil des Sägeblatts abzudecken. Der Arm ist hier schwenkbar an einem Lagerblock angebracht, um eine Kappfunktion zu ermöglichen. Eine Verbindungsstange verbindet die Pendelschutzhaube mit dem Lagerblock, so dass beim Verschwenken der Sägevorrichtung nach unten, um ein auf dem Auflagetisch angeordnetes Werkstück zu schneiden, sich die Pendelschutzhaube dreht und das Sägeblatt freigibt. Ferner ist hier ein Schutzhaubenverriegelungsmechanismus vorgesehen, um ein unerwünschtes Freigeben des Sägeblatts durch die Pendelschutzhaube zu verhindern. Der Schutzhaubenverriegelungsmechanismus besteht hier aus einem schwenkbar an der oberen Blattschutzhaube angeordneten Hebel, wobei der Hebel mit Zähnen ausgestattet ist. Die Pendelschutzhaube weist entsprechende Zähne auf, die mit den Zähnen des Hebels kämmend in Eingriff bringbar sind. Bei diesem Schutzhaubenverriegelungsmechanismus berühren die Zähne des Hebels die Zähne der Pendelschutzhaube, wenn die Sägevorrichtung in der oberen Stellung angeordnet ist. Wenn ein Benutzer versucht, die Sägevorrichtung nach unten zu bewegen, wird er daran gehindert, da die ineinander greifenden Zähne dies verhindern. Der Benutzer kann die Sägevorrichtung nur nach unten bewegen, wenn er den Hebel nach oben schwenkt, wodurch die Zähne außer Eingriff gebracht werden und dadurch die Pendelschutzhaube entriegelt wird. Dies hat den Nachteil, dass vor dem Ausführen der Kappbewegung der Schutzhaubenverriegelungsmechanismus betätigt werden muss, wodurch einerseits der Benutzer der Kappsäge vom präzisen Ausführen der Kappbewegung der Sägevorrichtung abgelenkt wird, andererseits der Arbeitsaufwand für den Benutzer stark erhöht ist.

Aus der DE 2829297 A1 ist eine Kappsäge mit einem Auflagetisch, mit einem Arm und mit einer am Arm angeordneten Sägevorrichtung bekannt. Die Sägevorrichtung weist hier ein mittels eines Handgriffes schwenkbares Gehäuse für den Antrieb eines rotierenden Sägeblattes auf. Das Sägeblatt ist von einer gegen eine Federkraft schwenkbaren Pendelschutzhaube in einer oberen Stellung abgedeckt. Durch Schwenken des Hebels wird nun mittels einer Zugverbindung die Pendelschutzhaube gegen die Kraft einer Rückstellfeder vom Sägeblatt weggeschwenkt. Der Hebel ist hier über einen Seilzug und über eine Seilrolle mit der Pendelschutzhaube verbunden. Wenn der Hebel nach unten bewegt wird, so wird die Pendelschutzhaube vom Sägeblatt weggeschwenkt. In der neuen Endlage nimmt der Hebel eine Stellung ein, in der bei einer weiteren Schwenkbewegung des Hebels die Sägevorrichtung auf das Werkstück heruntergeschwenkt wird. In dieser Ausgestaltung wird durch den Hebel zuerst die Pendelschutzhaube geöffnet und danach erst erfolgt die Zustellbewegung bzw. Kappbewegung der Sägevorrichtung.

Aus der DE 2443550 C3 ist eine gattungsgemäße Kappsäge mit einem Auflagetisch und mit einem Arm bekannt, wobei am Arm eine Handkreissäge als Sägevorrichtung angeordnet ist. Die Handkreissäge weist eine Pendelschutzhaube auf, die über einen Seilzug beim Herabschwenken der Sägevorrichtung selbsttätig abgehoben wird. Der Arm wird dabei mit der Handkreissäge geschwenkt und steht über den Seilzug mit der Schutzhaube der Handkreissäge in Verbindung. Die Pendelschutzhaube wird automatisch durch die Schwenkbewegung beim Kappschnitt weggeschwenkt. Hierbei ist es unvorteilhaft, dass ein gewisser Leerhub auszuführen ist, ehe das Sägeblatt freigegeben wird. Wenn das Sägeblatt freigegeben wird, befindet sich das Sägeblatt kurz vor dem Werkstück.

Die im Stand der Technik bekannten Kappsägen sind noch nicht optimal ausgebildet. Der Bedienkomfort der im Stand der Technik bekannten Kappsägen ist noch nicht optimal ausgebildet, da die Pendelschutzhauben teilweise per Hand geöffnet werden müssen oder erst umständlich entriegelt werden müssen, bevor die Kippbewegung erfolgen kann. Dies kann beim Arbeiten mit der Kappsäge für den Benutzer umständlich und sehr arbeitsaufwendig sein.

Der Erfindung liegt daher die Aufgabe zugrunde, eine Kappsäge derart auszugestalten und weiterzubilden, so dass eine unkomfortable Handhabung der Kappsäge, insbesondere der Pendelschutzhaube vermieden ist sowie die Gefahr von Verletzungen verringert ist.

Die zuvor aufgezeigt Aufgabe wird erfindungsgemäß durch die Merkmale des Anspruchs 1 gelöst . Vorteilhafte Weiterbildungen der Erfindung sind den Unteransprüchen 2 bis 12 zu entnehmen. Das Riegelelement muss daher hier insbesondere nur dann separat, vzw. manuell zusätzlich betätigt werden, wenn die Pendelschutzhaube zum Wechseln des Sägeblattes geöffnet werden muss. Im Normalfall öffnet sich die Pendelschutzhaube hinreichend allein durch das Absenken der Sägevorrichtung, also während der Kappbewegung der Sägevorrichtung (nach unten). Im oberen Teil der Kappbewegung, wenn die Kappbewegung zu weniger als 70%, insbesondere weniger als 50% ausgeführt ist, ist die Pendelschutzhaube vzw. zwangsgeführt, da, falls das Riegelelement nicht betätigt ist, also manuell nicht entriegelt wird, die Pendelschutzhaube nicht vzw. per Hand noch weiter oder insbesondere auch nicht vollständig öffenbar ist als es die realisierte Zwangsführung zulässt. Die Pendelschutzhaube ist jedoch im oberen Teil der Kappbewegung offenbar, wenn das Riegelelement manuell betätigt, nämlich zuvor in eine Entriegelungsstellung bewegt worden ist. Im unteren Teil der Kippbewegung, wenn die Kappbewegung zu bspw. mehr als 70% oder aber insbesondere mehr als 50% ausgeführt ist, kann die Pendelschutzhaube vzw. per Hand oder durch das Andrücken bzw. durch den Kontakt mit einem zu schneidenden, auf dem Auflagetisch aufliegenden Werkstück geöffnet werden, ohne dass das Riegelelement zusätzlich betätigt wird. D.h. das Riegelelement sperrt ein manuelles, zusätzliches weiteres Öffnen der Pendelschutzhaube in einem oberen Teil der Kappbewegung. In einem unteren Teil der Kappbewegung hat das Riegelelement keine verriegelnde Funktion, d.h. ein zusätzliches weiteres Öffnen, insbesondere ein vollständiges Öffnen der Pendelschutzhaube per Hand oder durch das Andrücken bzw. durch den Kontakt mit einem zu schneidenden, auf dem Auflagetisch aufliegenden Werkstück ist im unteren Teil der Kappbewegung nicht durch das Riegelelement sperrbar. Im Endeffekt kann die Pendelschutzhaube im oberen Teil der Kappbewegung per Hand also nur noch weiter geöffnet werden, wenn der Benutzer das Riegelelement im oberen Teil der Kappbewegung zusätzlich manuell entriegelt, also in seine Entriegelungsstellung bewegt, oder die Kappbewegung insbesondere zu 50% bereits ausgeführt ist und die Sägevorrichtung noch weiter nach unten geschwenkt wird, denn ab einem bestimmten Kapp-Schwenkpunkt hat das Riegelelement dann eben keine verriegelnde Wirkung mehr. Dieser - so realisierte - Schwenkmechanismus hat den Vorteil, dass eine automatische Entriegelung der Pendelschutzhaube mit der Kappbewegung geschieht und kein zusätzlicher Taster oder Riegel betätigt werden muss. Hierdurch ist eine zwangsgeführte im oberen Teil der Kappbewegung verriegelte, im unteren Teil der Kappbewegung entriegelte Pendelschutzhaube realisiert. Je weiter die Kappbewegung der Sägevorrichtung durchgeführt ist, umso weiter öffnet sich "automatisch" auch teilweise die Pendelschutzhaube. Ein vollständiges oder komplettes Öffnen der Pendelschutzhaube ist in den unterschiedlichen Lagen bzw. Stellungen der Sägevorrichtung aber vzw. nur unter folgenden Bedingungen möglich: Im oberen Teil der Kappbewegung ist das vollständige Öffnen nur bei gleichzeitiger manueller Betätigung des Riegelelements möglich, d.h. im oberen Teil der Kappbewegung muss die Pendelschutzhaube "aktiv" durch den Benutzer entriegelt werden, um die Pendelschutzhaube teilweise oder vollständig zu öffnen. Im unteren Teil der Kappbewegung hat das Riegelelement dann keine Funktion mehr und die Pendelschutzhaube kann vzw. per Hand oder in Kontakt mit einem Werkstück noch weiter, insbesondere dann auch vollständig geöffnet werden, als es durch die geführte Bewegung bereits vorgegeben ist. Dies hat ferner den Vorteil, dass im oberen Abschnitt der Kappbewegung ein unbeabsichtigtes teilweise aber vollständiges Öffnen der Pendelschutzhaube durch das Riegelelement kontrolliert bzw. erschwert wird. Die Gefahr von Verletzungen durch ein zu frühes Öffnen der Pendelschutzhaube ist hierdurch erheblich verringert. Im unteren Abschnitt der Kappbewegung, wenn die Sägevorrichtung mit dem Sägeblatt sich dem Werkstück nähert, kann ohne eine manuelle Betätigung des Riegelelements die Pendelschutzhaube noch weiter als die durch die Zwangsführung bereits vorgegebene Öffnung aufgeschwenkt werden, so dass die Handhabung der Pendelschutzhaube hierdurch erleichtert ist. Durch die so realisierte Zwangsführung der Pendelschutzhaube in Abhängigkeit der Kappbewegung der Sägevorrichtung ist die Pendelschutzhaube in der oberen Stellung der Sägevorrichtung automatisch verriegelt und in der unteren Stellung der Sägevorrichtung automatisch entriegelt, insbesondere vzw. entriegelt, wenn eine Kappbewegung der Sägevorrichtung bereits erfolgt ist, die größer als 50% vzw. größer als 70% des gesamten Kapp-Schwenkbereichs ist (von oben nach unten betrachtet). Hierbei ist in der oberen Stellung der Sägevorrichtung eine manuelle Öffnung der Pendelschutzhaube aufgrund der Verriegelung verhindert bzw. eben nur ermöglicht, wenn das Riegelelement zuvor entsprechend separat betätigt bzw. in der entriegelten Stellung gehalten wird, wobei in der "entriegelten Stellung" eine manuelle - insbesondere noch weitere - Öffnung der Pendelschutzhaube jederzeit unabhängig von der Betätigung und/oder der Stellung des Riegelelementes ermöglicht ist, nämlich dann, wenn die Kappbewegung der Sägevorrichtung bereits teilweise ausgeführt ist und sich die Sägevorrichtung in einer unteren Stellung befindet. Der so realisierte Schwenkmechanismus bzw. das Riegelelement und deren Funktionsweise darf im folgenden ausführlich erläutert werden. Im Ergebnis sind die eingangs beschriebenen Nachteile vermieden und entsprechende Vorteile erzielt.

Im folgenden wird nun eine bevorzugte Ausgestaltung der Erfindung anhand der Zeichnung der dazugehörigen Beschreibung näher erläutert. In der Zeichnung zeigt:
- Fig. 1: in einer schematischen, perspektivischen Explosionsdarstellung eine Kappsäge mit dem ebenfalls in Explosionsdarstellung schematisch gezeigten Schwenkmechanismus für die Pendelschutzhaube bzw. dessen Komponenten,
- Fig. 2: in einer schematischen, teilweise aufgebrochenen dargestellten Seitenansicht die Kappsäge aus Fig. 1, mit einer Sägevorrichtung in einer oberen Stellung mit geschlossener und verriegelter Pendelschutzhaube,
- Fig. 3: in einer schematischen, teilweise aufgebrochenen Detaildarstellung die Kappsäge mit der Sägevorrichtung aus der Figur 2,
- Fig. 4: in einer schematischen, teilweise aufgebrochenen dargestellten Seitenansicht die Kappsäge aus den Figuren 1 bis 3, wobei die Sägevorrichtung in einer mittleren Stellung angeordnet bzw. in eine mittlere Stellung verschwenkt worden ist, mit einer teilweise geöffneten Pendelschutzhaube,
- Fig. 5: in einer schematischen, teilweise aufgebrochenen Detaildarstellung die Sägevorrichtung in der mittleren Stellung aus Fig. 4 in Seitenansicht,
- Fig. 6: in einer schematischen, teilweise aufgebrochenen dargestellten Seitenansicht die Kappsäge aus den Figuren 1 bis 5, wobei die Sägevorrichtung in einer unteren Stellung angeordnet ist,
- Fig. 7: in einer schematischen, teilweise aufgebrochenen Detaildarstellung die Kappsäge aus den Figuren 1 bis 6, wobei die Sägevorrichtung in der in Fig. 6 gezeigten, unteren Stellung angeordnet bzw. verschwenkt worden ist,
- Fig. 8: in einer schematischen, teilweise aufgebrochenen Seitenansicht die Kapp- und Gehrungssäge aus den Figuren 1 bis 7, wobei die Sägevorrichtung in der unteren Stellung angeordnet ist und eine Pendelschutzhaube vollständig geöffnet dargestellt ist,
- Fig. 9: in einer schematischen, teilweise aufgebrochenen Detaildarstellung die Kappsäge aus den Figuren 1 bis 8, wobei die Sägevorrichtung in der in Fig. 8 dargestellten Stellung angeordnet ist und die Pendelschutzhaube ebenfalls vollständig geöffnet ist,
- Fig. 10: in einer schematischen, teilweise aufgebrochenen dargestellten Seitenansicht die Kappsäge aus den Figuren 1 bis 8, wobei die Sägevorrichtung in einer oberen Stellung angeordnet ist und die Pendelschutzhaube nicht geöffnet (geschlossen), aber entriegelt ist,
- Fig. 11: in einer schematischen, teilweise aufgebrochenen Detailansicht die Kappsäge in der in Fig. 10 dargestellten Stellung,
- Fig. 12: in einer schematischen, teilweise aufgebrochenen dargestellten Seitenansicht die Kappsäge aus den Figuren 1 bis 11, wobei in der oberen Stellung der Sägevorrichtung die Pendelschutzhaube entriegelt und vollständig geöffnet ist, und
- Fig. 13: in einer schematischen, teilweise aufgebrochenen Detaildarstellung die Kappsäge aus Fig. 12 in der dort dargestellten Stellung.

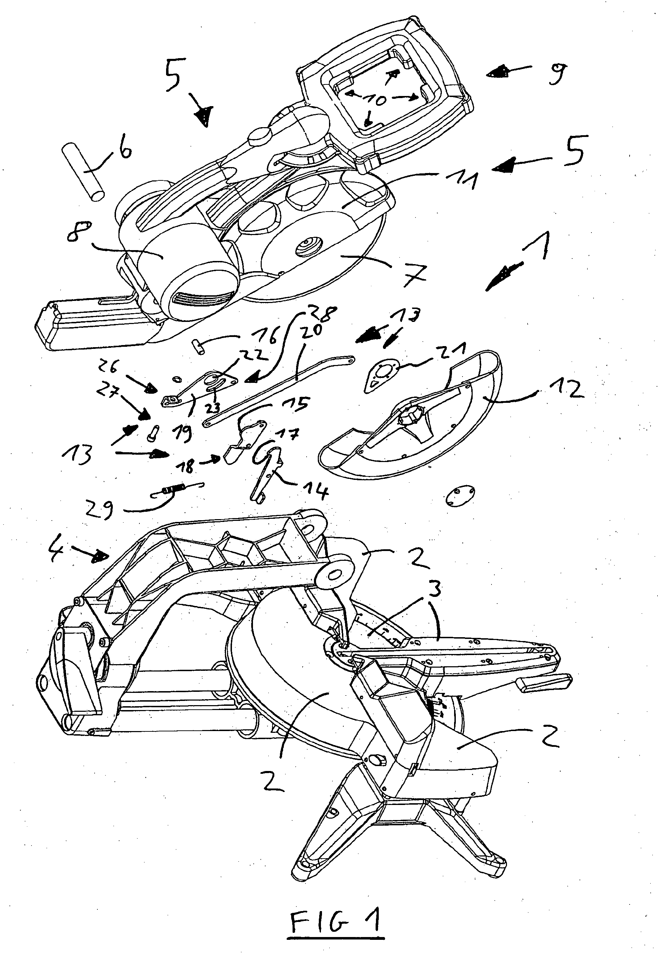

In den Figuren 1 bis 13 ist zunächst eine Kappsäge 1 gut zu erkennen und - zumindest teilweise - schematisch dargestellt.

Die Kappsäge 1 ist insbesondere als Kapp- und Gehrungssäge (nicht näher bezeichnet) ausgestaltet. Die Kappsäge 1 weist einen Auflagetisch 2 auf. Mit der Kappsäge 1 können insbesondere Werkstücke (nicht dargestellt) wie Leisten, Paneele oder Platten auf die gewünschte Länge geschnitten werden. Dazu werden diese Werkstücke auf den Auflagetisch 2 gelegt bzw. insbesondere quer angeordnet. Die Werkstücke erstrecken sich dann mit ihrer Längsachse quer auf dem Auflagetisch 2. Der Auflagetisch 2 weist eine nicht näher bezeichnete Oberseite auf, wobei die Oberseite zur Auflage der nicht dargestellten Werkstücke dient.

Die vzw. als Kapp- und Gehrungssäge ausgestaltete Kappsäge 1 weist ferner ein relativ zum Auflagetisch 2 um eine Hochachse (nicht dargestellt) schwenkbares Drehmittel 3 auf. Das Drehmittel 3 ist um die Hochachse relativ zum Auflagetisch 2 drehbar angeordnet. Das Drehmittel 3 ist auf einer nicht näher bezeichneten Bodenplatte drehbar gelagert. Das Drehmittel 3 erstreckt sich hier teilweise unterhalb des Auflagetisches 2.

Die Kappsäge 1 weist ferner einen Arm 4 auf, der mit dem Drehmittel 3 funktional wirksam in Verbindung steht. Der Arm 4 ist vzw. über ein nicht näher bezeichnetes Schwenkgelenk und/oder eine Gleitführungsvorrichtung mit dem Drehmittel 3 verbunden, wodurch die Kappsäge 1 eine weitere Schwenkmöglichkeit und/oder Zugfunktion bereitstellt. Der Arm 4 ist zusammen mit dem Drehmittel 3 um die Hochachse schwenkbar.

Die Kappsäge 1 weist ferner eine Sägevorrichtung 5 auf, wobei die Sägevorrichtung 5 oberhalb des Auflagetisches 2 angeordnet ist. Die Sägevorrichtung 5 ist am Arm 4 angeordnet. Die Sägevorrichtung 5 ist hier um eine Kappachse 6 schwenkbar angeordnet. Die Kappachse 6 erstreckt sich hier quer zum Arm 4 - vzw. im wesentlichen horizontal - je nach Stellung des Arms 4. In alternativer, nicht dargestellter Ausgestaltung kann die Sägevorrichtung 5 drehfest am Arm 4 angeordnet sein und der Arm 4 zusammen mit der Sägevorrichtung 5 schwenkbar um eine Kappachse angeordnet sein.

Die Sägevorrichtung 5 weist ein Sägeblatt 7 auf. Das Sägeblatt 7 wird dabei vzw. von einem Elektromotor angetrieben, der ebenfalls der Sägevorrichtung 5 zugeordnet ist (nicht im einzelnen dargestellt). In Fig. 1 ist bspw. ein Motorgehäuse 8 des Elektromotors zum Antrieb des Sägeblattes 7 dargestellt. Die Sägevorrichtung 5 weist ferner ein Betätigungsgriff 9 mit insbesondere mehreren Betätigungsschaltern 10 auf (vgl. Fig. 1). Ein Benutzer der Kappsäge 1 kann die Sägevorrichtung 5 um die Kappachse 6 mittels des Betätigungsgriffs 9 nach oben oder nach unten schwenken.

Die Sägevorrichtung 5 weist eine Blattschutzhaube 11 auf. Relativ zum Betätigungsgriff 9 und zum Motorgehäuse 8 gesehen ist die Blattschutzhaube 11 feststehend. Die Sägevorrichtung 5 weist ferner eine Pendelschutzhaube 12 auf. Die Pendelschutzhaube 12 ist relativ zur Blattschutzhaube 11 schwenkbar angeordnet. Die Blattschutzhaube 11 deckt den oberen Teil des Sägeblatts 7 ab. Die Pendelschutzhaube 12 kann den unteren Teil des Sägeblatts 7 abdecken.

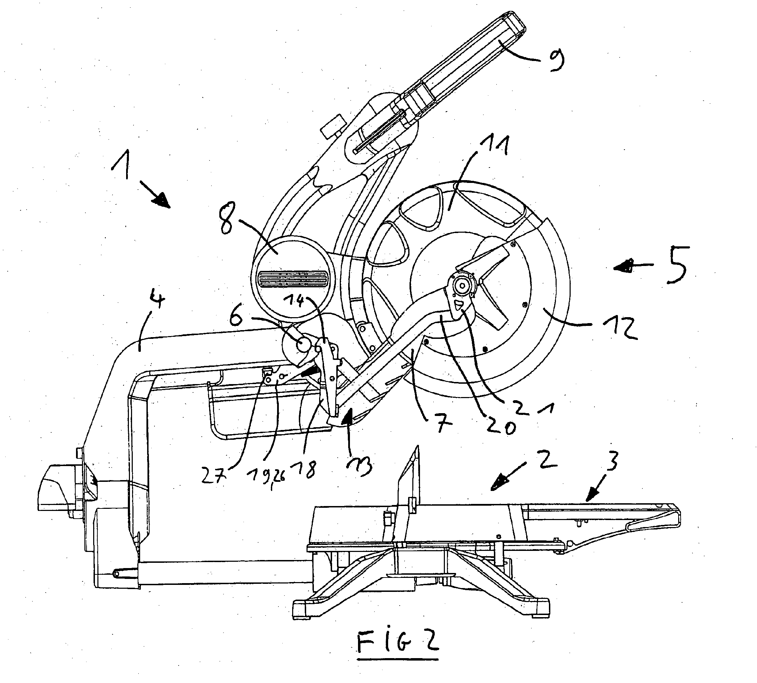

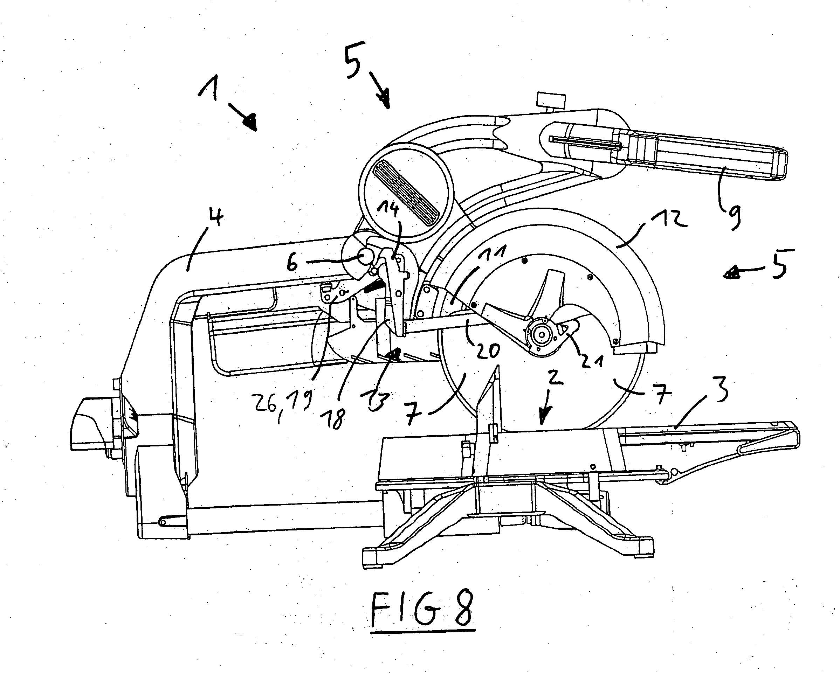

Die Pendelschutzhaube 12 verdeckt in einer geschlossenen Stellung den unteren Teil des Sägeblatts 7, insbesondere vollständig (vgl. Fig. 2, Fig. 3, Fig. 10, Fig. 11). In einer geöffneten Stellung gibt die Pendelschutzhaube 12 den unteren Teil des Sägeblatts 7 im wesentlichen vollständig frei (vgl. Fig. 8, Fig. 9, Fig. 12, Fig. 13). Die Pendelschutzhaube 12 ist dann im wesentlichen über die Blattschutzhaube 11 geschwenkt.

Die Kappbewegung der Sägevorrichtung 5 ist über einen Schwenkmechanismus 13 mit der Dreh- und/oder Schwenkbewegung der Pendelschutzhaube 12 derart gekoppelt, dass die Pendelschutzhaube 12 durch Herabschwenken (Kuppelbewegung) der Sägevorrichtung 5 öffenbar und durch Heraufschwenken der Sägevorrichtung 5 schließbar ist (vgl. Fig. 2 bis Fig. 13).

Die eingangs beschriebenen Nachteile sind nun dadurch vermieden, dass der Schwenkmechanismus 13 ein Riegelelement 14 aufweist, wobei der Schwenkmechanismus 13 und das Riegelelement 14 derart angeordnet und/oder ausgebildet sind, so dass die Pendelschutzhaube 12 - vzw. per Hand oder vzw. durch ein zu schneidendes, vorgesehenes Werkstück - noch weiter, insbesondere vollständig offenbar ist, wenn entweder das Riegelelement 14 betätigt ist oder die Kappbewegung zumindest teilweise bereits ausgeführt ist.

Dies hat u.a. den Vorteil, dass vzw. bis zur Hälfte der Kappbewegung die Pendelschutzhaube 12 zwar bereits teilweise geöffnet ist, sich aber nicht vollständig per Hand öffnen lässt, soweit nicht auch das Riegelelement 14 separat manuell betätigt ist bzw. wird. Im unteren Bereich der Kappbewegung ist die Pendelschutzhaube 12 vzw. noch weiter geöffnet und lässt sich zusätzlich per Hand oder durch den Kontakt mit einem entsprechenden Werkstück auch vollständig öffnen, ohne dass das Riegelelement 14 betätigt werden muss. Im unteren Teil der Kappbewegung hat das Riegelelement 14 daher keine Funktion bzw. sperrt nicht den Öffnungsvorgang der Pendelschutzhaube 12. Die Funktionsweise des Schwenkmechanismus 13 und des Riegelelementes 14 darf im folgenden näher erläutert werden:

Der Schwenkmechanismus 13 weist eine Steuerkurve 15 und ein mit der Steuerkurve 15 zusammenwirkendes Steuermittel 16 auf, um die Schwenkbewegung der Pendelschutzhaube 12 zu steuern. Das Steuermittel 16 bewegt sich bei der anfänglichen Kappbewegung der Sägevorrichtung 5 entlang der Steuerkurve 15. Durch die Gestaltung der Steuerkurve 15 wird dabei die Öffnung der Pendelschutzhaube 12 in Abhängigkeit von der Stellung der Sägevorrichtung 5 bestimmt. Das Riegelelement 14 ist nun so in einer Sperrposition bzw. sperrend oder verriegelnd angeordnet und/oder anordenbar, dass das Riegelelement 14 beim Versuch des manuellen, vollständigen Offnens der Pendelschutzhaube 12 am Steuermittel 16 anschlägt, falls die Kappbewegung nur teilweise ausgeführt ist. Falls die Kappbewegung mehr als insbesondere 50%, vzw. mehr als 70% ausgeführt ist, schlägt das Riegelelement 14 beim Öffnen des Pendelschutzhaube 12 (per Hand oder durch den Kontakt mit einem Werkstück) nicht mehr am Steuerelement 16 an. Das Riegelelement 14 stellt während dem oberen Teil der Kappbewegung einen Anschlag 17 zur Funktionsweise mit dem Steuermittel 16 bereit, falls die Pendelschutzhaube 12 per Hand geöffnet wird. Das Steuermittel 16 ist vzw. als Stift ausgebildet. Das Steuermittel 16 kann alternativ als Stift mit einer zusätzlichen Rolle (nicht dargestellt) ausgebildet sein. Das insbesondere stiftförmige Steuermittel 16 ist beabstandet zur Kappachse 6 angeordnet. Das Steuermittel 16 ist drehfest der Sägevorrichtung 5 zugeordnet. Die Sägevorrichtung 5 weist damit das Steuermittel 16 auf. Beim Schwenken der Sägevorrichtung 5 wird daher das Steuermittel 16 um die Kappachse 6 geschwenkt. Die Steuerkurve 15 ist an einem Steuerhebel 18 ausgebildet. Der Steuerhebel 18 ist einerseits schwenkbeweglich an einer Gelenkbasis 19 vzw. über einen Bolzen 30 angeordnet. Die Gelenkbasis 19 ist am Arm 4 festgelegt, insbesondere verstellbar/einstellbar befestigt. Der Steuerhebel 18 wirkt andererseits mit einer Schubstange 20 zusammen, wobei die Schubstange 20 funktional wirksam an der Pendelschutzhaube 12 angreift. Der Steuerhebel 18 ist mit der Schubstange 20 gelenkig verbunden.

Die Schubstange 20 greift hier an einer Drehplatte 21 an, wobei die Drehplatte 21 mit der Pendelschutzhaube 12 drehfest verbunden ist. Die Schubstange 20 ist dabei gelenkig mit der Drehplatte 21 verbunden. Die Schubstange 20 greift exzentrisch an der Pendelschutzhaube 12 bzw. exzentrisch an der Drehplatte 21 an, wobei die Pendelschutzhaube 12 entgegen einer Federkraft einer im Bereich der Drehplatte 21 angeordneten, nicht dargestellten Feder in Öffnungsstellung entgegen dem Uhrzeigersinn verschwenkbar bzw. drehbar ist.

Die Gelenkbasis 19 des Schwenkmechanismus 13 ist wie folgt am Arm 4 festgelegt: Die Gelenkbasis 19 ist hier auf der Kappachse 6 mit einer entsprechenden Kappachsöffnung 22 gelagert (vgl. Fig. 1). Konzentrisch zur Kappachsöffnung 22 weist die Gelenkbasis 19 ferner ein sich kreissegmentförmig erstreckendes Langloch 23 auf (vgl. Fig. 1). Durch dieses Langloch 23 greift das stiftförmige Steuermittel 16 hindurch. Die Gelenkbasis 19 wird beim Schwenken der Sägevorrichtung 5 nicht mitgeschwenkt, aber das Steuermittel 16 kann sich innerhalb des Langloches 23 relativ zur Gelenkbasis 19 bewegen.

Der Schwenkmechanismus 13 weist vzw. die Gelenkbasis 19, den mit der Gelenkbasis 19 gelenkig verbundenen Steuerhebel 18 und die gelenkig mit dem Steuerhebel 18 wiederum verbundene Schubstange 20 auf, wobei die Schubstange 20 funktional wirksam, exzentrisch an der Pendelschutzhaube 12 angreift. Ferner kann der Schwenkmechanismus 13 wie dargestellt die Drehplatte 21 aufweisen oder alternativ direkt an der Pendelschutzhaube 12 angreifen.

Im oberen Teil der Kappbewegung ist die Pendelschutzhaube 12 "zwangsgeführt". Im unteren Teil der Kappbewegung vzw. etwa ab 50%, insbesoridere ab 70% der ausgeführten Kappbewegung in Richtung nach unten, kann die Bewegung der Pendelschutzhaube 12 zwar grundsätzlich noch durch die Steuerkurve 15 geführt sein, ist aber nicht mehr zwangsgeführt, da das Riegelelement 14 hier seine Funktion verliert, insbesondere der Anschlag 17 nicht mehr am Steuermittel 16 anschlagen kann. Es handelt sich bei der Pendelschutzhaube 12 daher dann um eine "offene zwangsgeführte" Pendelschutzhaube 12. Dies bedeutet, dass im oberen Teil der Kappbewegung die Pendelschutzhaube 12 mit Hilfe des Riegelelementes 14 verriegelt ist, d.h. nicht manuell vollständig geöffnet werden kann, wobei im unteren Teil der Kappbewegung das Riegelelement 14 hier keinen Einfluss mehr hat, d.h. die Pendelschutzhaube 12 entriegelt ist, so dass die Pendelschutzhaube 12 noch weiter öffenbar, insbesondere vollständig manuell öffenbar ist.

Die Öffnungsbewegung der Pendelschutzhaube 12 während der Kappbewegung, bzw. während der Zustellbewegung der Sägevorrichtung 5 von oben nach unten ist dadurch zwangsgeführt, dass die Steuerkurve 15 des Steuerhebels 18 am Steuermittel 16 anliegt. Das Steuermittel 16 ist dabei drehfest als Teil der Sägevorrichtung 5 bei der Kappbewegung auch nach unten schwenkbar. Das stiftförmige Steuermittel 16 kann insbesondere am Motorgehäuse 8 befestigt sein. Das Motorgehäuse 8 schwenkt mit dem Rest der Sägevorrichtung 5 um die Kappachse 6. In der oberen Stellung der Sägevorrichtung 5 kann der Steuerhebel 18 nicht ohne weiteres um die Gelenkbasis 19 schwenken, da durch den vzw. hakenförmigen Anschlag 17 des Riegelelements 14 die Beweglichkeit des Steuerhebel 18 aufgrund der Stellung/Positionierung des Riegelelements 14 beschränkt ist.

D.h. der Anschlag 17 schlägt am Steuermittel 16 an, falls die Sägevorrichtung 5 in einer oberen Stellung ist und in dieser Position versucht wird, die Pendelschutzhaube 12 mit der Hand vollständig zu öffnen. Der Anschlag 17 erstreckt sich vzw. hakenförmig oberhalb der Steuerkurve 15. Beim Versuch die Pendelschutzhaube 12 in einer oberen Stellung der Sägevorrichtung 5 per Hand zu öffnen, schlägt der Anschlag 17 am Steuermittel 16 an, wodurch die Öffnungsbewegung der Pendelschutzhaube 12 gestoppt und blockiert ist, da hierdurch auch eine Bewegung des Steuerhebels 18 entgegen dem Uhrzeigersinn blockiert ist. Bei einem solchen Öffnungsversuch hakt sich das stiftförmige Steuermittel 16 bei dem entsprechenden Öffnungsversuch weiter in das Riegelelement 14 bzw. den Anschlag 17 ein, was ein Öffnen der Pendelschutzhaube 12 in der oberen Stellung der Sägevorrichtung 5 bzw. auch während dem oberen Teil der Kappbewegung verhindert. Die Pendelschutzhaube 12 kann nämlich nur durch ein Schwenken des Steuerhebels 18 entgegen dem Uhrzeigersinn um die Gelenkbasis 19 und durch eine entsprechende Schwenkbewegung der Schubstange 20 zusammen mit dem Steuerhebel 18 geöffnet werden.

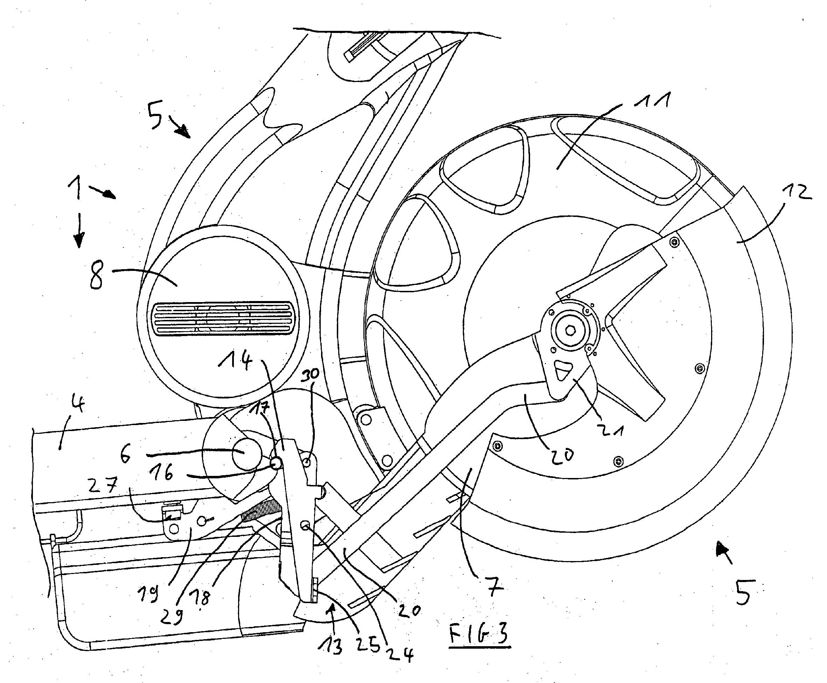

Im folgenden wird auf die Detaildarstellung in den Fig. 3, 5, 7, 9, 11 und 13 Bezug genommen:
Wenn der Kappvorgang eingeleitet wird, gleitet das Steuermittel 16 an der Steuerkurve 15 des Steuerhebels 18 entlang, so dass der Steuerhebel 18 - in den Fig. 3, 5, 7, 9, 11 und 13 linksdrehend, - entgegen dem Uhrzeigersinn und entgegen der Kappbewegung der Sägevorrichtung 5 bewegt wird. Durch das Zusammenwirken der Steuerkurve 15 und des Steuermittels 16 kann die Pendelschutzhaube 12 geöffnet werden und wird auch entgegen dem Uhrzeigersinn verdreht bzw. verschwenkt.

Die Steuerkurve 15 des Steuerhebels 18 und der Abstand des stiftförmigen Steuermittels 16 zur Kappachse 6 bestimmt die Öffnungsgeschwindigkeit der Pendelschutzhaube 12. Je weiter die Kappbewegung durchgeführt ist, umso weiter entfernt sich das Steuermittel 16 vom Anschlag 17 des Riegelelements 14. Wenn die Kappbewegung zu vzw. ca. 70% ausgeführt ist, ist der Abstand der Steuermittels 16 zum Anschlag 17 so groß, dass die Pendelschutzhaube 12 auch vzw. vollständig per Hand geöffnet werden kann oder die Form bzw. die Dicke des zu schneidenden Werkstücks des Öffnungswinkel vorgibt, ohne dass der Anschlag 17 des Riegelelementes 14 noch am Steuermittel 16 anschlägt, wenn sich der Steuerhebel 18 entgegen dem Uhrzeigersinn bewegt. Zwischen der obersten Stellung der Sägevorrichtung 5 und der Stellung der Sägevorrichtung 5, wenn die Kappbewegung zu ca. 50%, vzw. zu ca. 70% ausgeführt ist, ist nur eine Teilöffnung der Pendelschutzhaube 12 möglich, sofern das Riegelelement 14 nicht betätigt ist. Das Riegelelement 14 ist an einer Achse 24 am Steuerhebel 18 schwenkbar gelagert. Das Riegelelement 14 weist ferner an dem dem Anschlag 17 gegenüberliegenden Ende einen Handhabungsbereich 25 auf. Der Handhabungsbereich 25 ist hier so betätigbar, dass der Anschlag 17 des Riegelelements 14 von der Steuerkurve 15 bzw. vom Steuermittel 16 rechtsdrehend weggeschwenkt wird, so dass das Steuermittel 16 keine Begrenzung mehr für den Anschlag 17 darstellt, wenn die Pendelschutzhaube 12 per Hand vollständig geöffnet wird. Dies bedeutet, dass der Steuerhebel 18 dann entgegen dem Uhrzeigersinn verschwenkbar ist und das Riegelelement 14 zusammen mit dem Steuerhebel 18 verschwenkt wird, aber durch das Steuermittel 16 nicht blockiert wird.

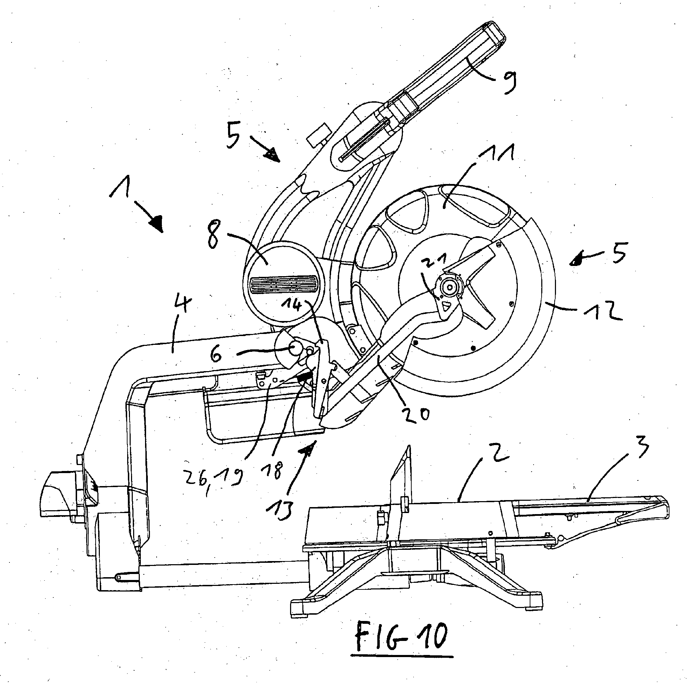

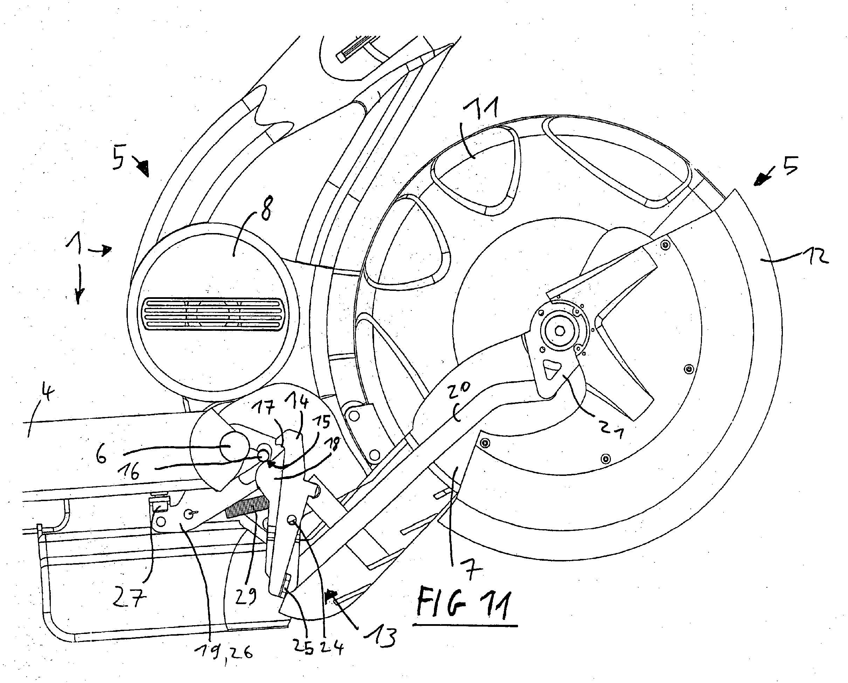

In den Fig. 2, 3, 10 und 11 ist eine obere Stellung der Sägevorrichtung 5 dargestellt, wobei hier das Riegelelement 14 in den Fig. 2 und 3 nicht betätigt und in den Fig. 10 und 11 betätigt ist und somit die Pendelschutzhaube 12 in den Fig. 2 und 3 verriegelt und in den Fig. 10 und 11 entriegelt ist. Durch Betätigung des Handhabungsbereichs 25 kann der Anschlag 17 des Riegelelements 14 nach rechts zurückgeschwenkt werden und so das Steuermittel 16 freigeben. Erst hiernach lässt sich in der oberen Stellung die Pendelschutzhaube 12 dann vollständig öffnen. So ist bspw. unter anderem in den Fig. 1 bis 3 gut ersichtlich, dass hier das Riegelelement 14 an der Achse 24 gelenkig mit dem Steuerhebel 18 verbunden ist, wobei ein Federelement zwischen dem Riegelelement 14 und der Gelenkbasis 19 wirksam angeordnet ist. Durch das Federelement 29 wird das Riegelelement 14 entgegen dem Uhrzeigersinn drehend vorbelastet, da ein entsprechendes Ende des Federelements 19 an einem, hier nicht näher bezeichneten Vorsprung/Absatz des Riegelelementes 14 angreift. Aufgrund des hier nicht näher bezeichneten Fortsatzes/Absatzes des Riegelelementes 14 ist auch die Bewegung des Riegelelementes 14 entgegen dem Uhrzeigersinn begrenzt, da dieser Fortsatz/Absatz am Steuerhebel 18 begrenzend anschlägt bzw. anliegt.

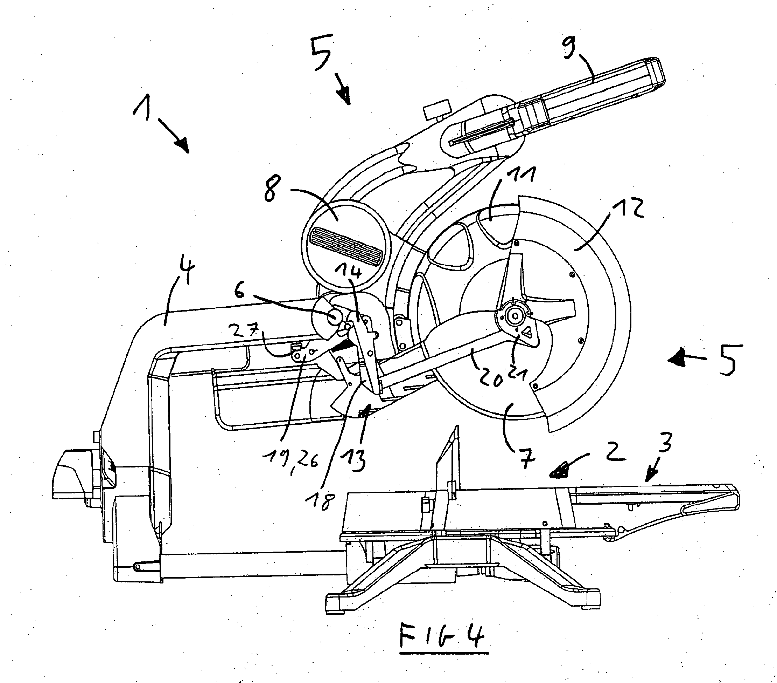

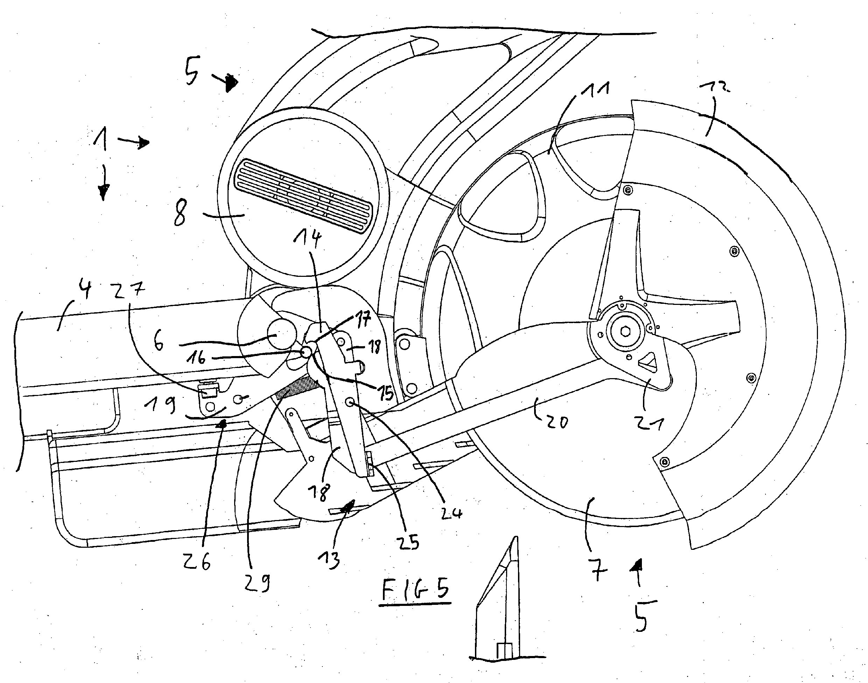

In den Fig. 4 und 5 ist eine mittlere Stellung der Sägevorrichtung 5 und der Pendelschutzhaube 12 dargestellt. Die Pendelschutzhaube 12 kann nur um einige Grad /in etwa 10°) mit der Hand geöffnet werden, bevor der Anschlag 17 an dem Steuermittel 16 anschlägt. Eine vollständige Öffnung der Pendelschutzhaube 12 ist nur möglich, wenn der Anschlag 17 durch Betätigung des Riegelelements 14 zurückgeschwenkt wird und so mit dem Steuermittel 16 nicht mehr in Berührung kommen kann.

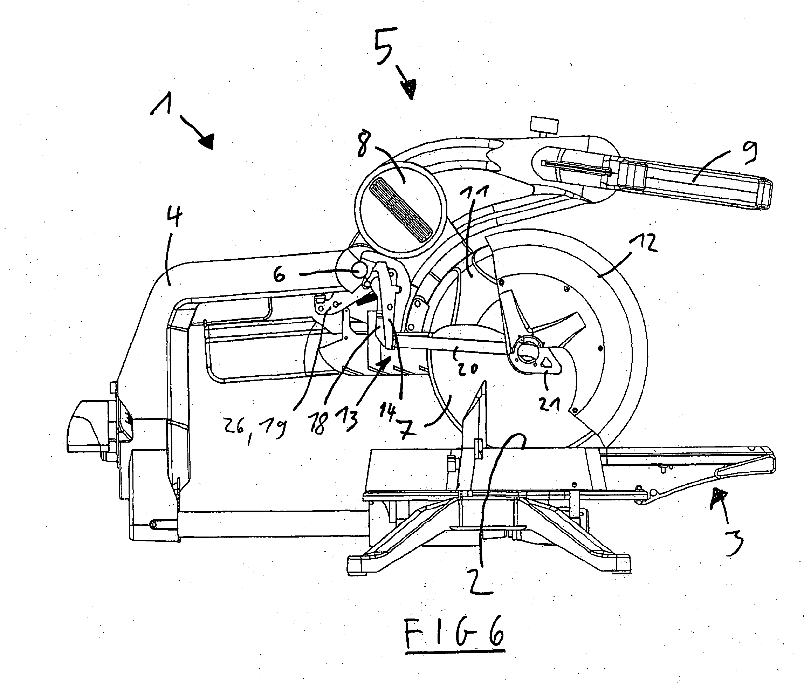

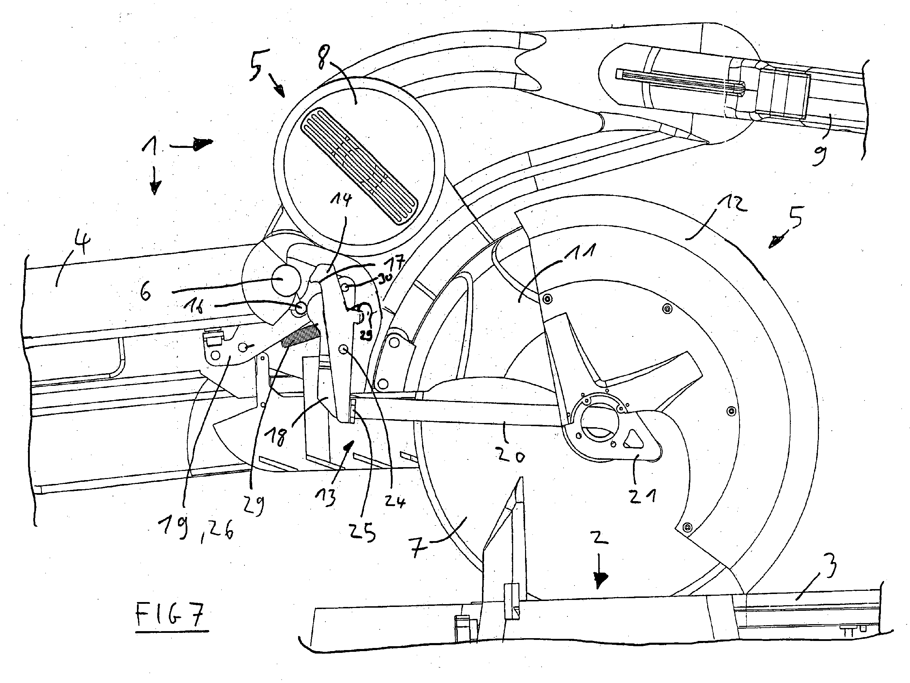

In den Fig. 6 und 7 ist eine Stellung der Sägevorrichtung 5 dargestellt, in der das Sägeblatt 7 bis zum Auflagetisch 2 abgesenkt ist. Die Pendelschutzhaube 12 liegt auf dem Auflagetisch 2 auf und kann noch vzw. weiter per Hand geöffnet werden oder die Form bzw. Dicke eines hier nicht dargesellten Werkstückes gibt den Öffnungswinkel der Pendelschutzhaube 12 vor. In dieser Stellung liegt das Steuermittel 16 nicht mehr an der Steuerkurve 15 an, auch wenn dies in Fig. 6 und 7 nicht deutlich im einzelnen dargestellt ist.

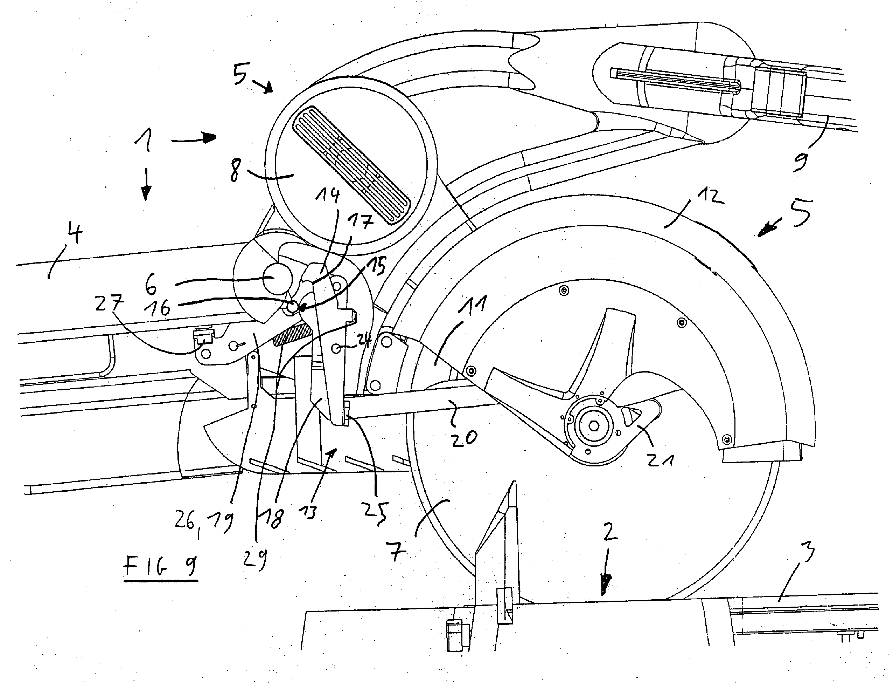

In den Fig. 8 und 9 ist die Sägevorrichtung 5 in derselben Stellung wie in Fig. 6 und 7, nämlich in der unteren abgesenkten Stellung dargestellt, allerdings ist hier die Pendelschutzhaube 12 vollständig geöffnet. Die Drehplatte 21 ist um einen entsprechenden Winkel zusammen mit der Pendelschutzhaube 12 im Vergleich zu Fig. 7 gedreht.

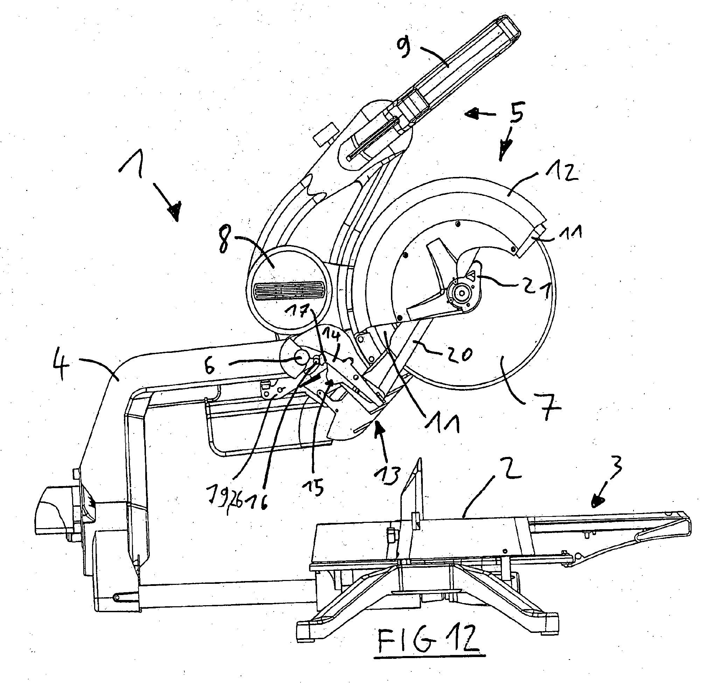

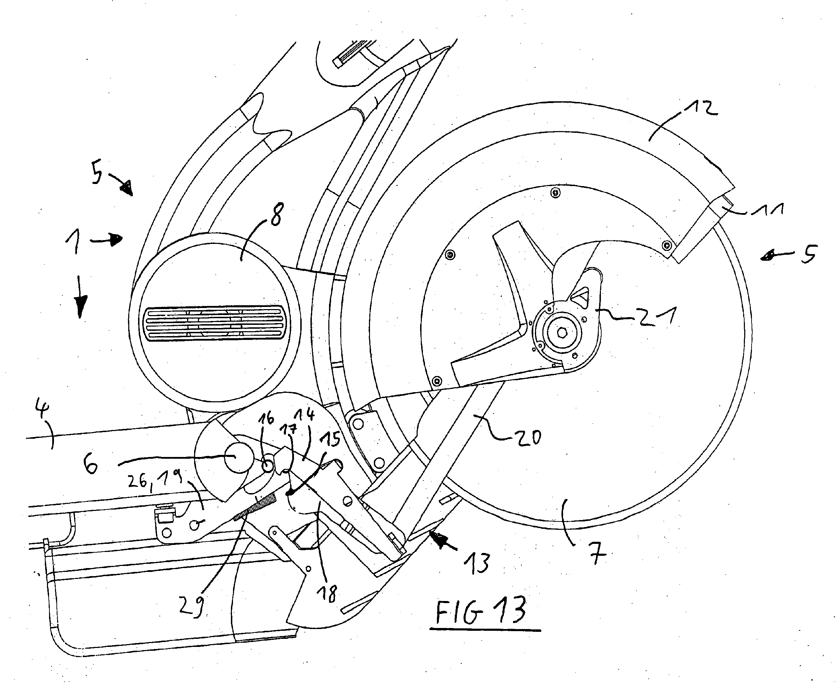

In den Fig. 10, 11, 12 und 13 ist die Kappsäge 1 dargestellt, wobei die Sägevorrichtung 5 in einer oberen Stellung angeordnet ist. In den Fig. 10 und 11 ist dabei das Riegelelement 14 in seiner geöffneten Stellung, aber die Pendelschutzhaube 12 noch in ihrer geschlossenen Stellung dargestellt. In den Fig. 12 und 13 ist die Pendelschutzhaube 12 vom Sägeblatt 7 weggeschwenkt, d.h. in ihrer offenen Stellung angeordnet. Insbesondere aus Fig. 11 ist gut erkennbar, dass in der dort dargestellten, betätigten Stellung des Riegelelements 14 der Anschlag 17 des Riegelelements 14 die Schwenkbewegung des Steuerhebels 18 nicht mehr behindert, d.h. ausgehend von der in Fig. 11 dargestellten Stellung kann der Steuerhebel 18 um die Gelenkbasis 19 geschwenkt werden, wodurch die Pendelschutzhaube 12 nach oben über die Blattschutzhaube 11 geschwenkt wird. Dies ist hier nur bei einem betätigten Riegelelement 14 möglich. Die Pendelschutzhaube 12 ist vzw. federbelastet vorgespannt. Die Pendelschutzhaube 12 muss vzw. in dieser Stellung festgehalten werden, weil sonst die Pendelschutzhaube 12 durch eine Federkraft automatisch wieder schließt und verriegelt.

Eine weitere besonders bevorzugte Ausgestaltung der Erfindung bezieht sich auf die Gelenkbasis 19. Die im Stand der Technik bekannten Pendelschutzhauben haben den Nachteil, dass diese Pendelschutzhauben nicht sorgfältig schließen. Um dieses Problem zu lösen, ist hier die Gelenkbasis 19 auf der Kappachse angeordnet. Die Gelenkbasis 19 ist auf der Kappachse 6 insbesondere beweglich angeordnet. Die Gelenkbasis 19 ist an ihrer einen Seite - einem ersten Arm 26 - am Arm 4 der Kappsäge einstellbar befestigt. Dazu ist die Position des Arms 26 der Gelenkbasis 19 mit einer Stellschraube 27 (vgl. Fig. 1) relativ zum Arm 4 der Kappsäge 1 einstellbar. Die Gelenkbasis 19 weist auf der anderen Seite einen weiteren Arm 28 auf. An diesem Arm 28 ist der Steuerhebel 18 schwenkbeweglich angeordnet. Durch Einstellen der Position des Arms 26 kann damit die Position des Arms 28 und damit des Steuerhebels 18 relativ zum Steuermittel 16 eingestellt werden. Durch Einstellen der Stellschraube 27 ist das Schließverhalten der Pendelschutzhaube 12 verbessert.

### Bezugszeichenliste:

- 1: Kappsäge
- 2: Auflagetisch
- 3: Drehmittel
- 4: Arm
- 5: Sägevorrichtung
- 6: Kappachse
- 7: Sägeblatt
- 8: Motorgehäuse
- 9: Betätigungsgriff
- 10: Betätigungsschalter
- 11: Blattschutzhaube
- 12: Pendelschutzhaube
- 13: Schwenkmechanismus
- 14: Riegelelement
- 15: Steuerkurve
- 16: Steuermittel
- 17: Anschlag
- 18: Steuerhebel
- 19: Gelenkbasis
- 20: Schubstange
- 21: Drehplatte
- 22: Kappachsöffnung
- 23: Langloch
- 24: Achse
- 25: Handhabungsbereich
- 26: Arm
- 27: Stellschraube
- 28: Arm
- 29: Federelement
- 30: Bolzen

## Patentansprüche

1. Kappsäge, insbesondere Kapp- und Gehrungssäge, mit einem Auflagetisch (2) und mit einer Sägevorrichtung (5), wobei die Sägevorrichtung (5) um eine Kappachse (6) schwenkbar angeordnet ist, wobei die Sägevorrichtung (5) ein Sägeblatt (7) und eine bewegbare Pendelschutzhaube (12) aufweist und ein Schwenkmechanismus (13) vorgesehen ist, wobei bei einer Kappbewegung der Sägevorrichtung (5) über den Schwenkmechanismus (13) eine Dreh- und/oder Schwenkbewegung der Pendelschutzhaube (12) derart realisierbar ist, dass die Pendelschutzhaube (12) durch Herabschwenken der Sägevorrichtung (5) zumindest teilweise öffenbar und durch Heraufschwenken der Sägevorrichtung (5) schließbar ist, wobei im unteren Teil der Kappbewegung die Pendelschutzhaube (12), vzw. per Hand oder durch das Andrücken bzw. durch den Kontakt mit einem zu schneidenden, auf dem Auflagetisch (2) aufliegenden Werkstück, insbesondere vollständig öffenbar ist, **dadurch gekennzeichnet, dass** der Schwenkmechanismus (13) ein Riegelelement (14) aufweist, wobei der Schwenkmechanismus (13) und das Riegelelement (14) derart angeordnet und/oder ausgebildet sind, dass in der oberen Stellung der Sägevorrichtung (5) die dann geschlossene Pendelschutzhaube (12) verriegelt ist, so dass eine unbeabsichtigte Öffnung der Pendelschutzhaube (12), ohne eine separate Betätigung des Riegelelementes (14) verhindert ist, und dass durch den Schwenkmechanismus (13) eine automatische Entriegelung der Pendelschutzhaube (12) mit der Kappbewegung realisiert ist, so dass ab einem bestimmten Kapp-Schwenkpunkt das Riegelelement (14) keine verriegelnde Wirkung mehr hat.

2. Kappsäge nach Anspruch 1, **dadurch gekennzeichnet, dass** die Sägevorrichtung (5) in eine obere, vzw. in eine oberste Stellung schwenkbar und durch Durchführung der Kappbewegung in eine von der oberen Stellung abweichende untere, vzw. unterste Stellung schwenkbar ist.

3. Kappsäge nach einem der vorhergehenden Ansprüche, **dadurch gekennzeichnet, dass** nach der Durchführung eines bestimmten Teils der Kappbewegung der Sägevorrichtung (5) aus der oberen in eine untere Stellung, nach der Durchführung der Kappbewegung von größer als 50% des Schwenkbereichs, die Verriegelung der Pendelschutzhaube (12) aufgrund der bereits durchgeführten Kappbewegung automatisch aufgehoben ist, nämlich das Riegelelement (14) eine weitere Öffnung der Pendelschutzhaube (12) nicht mehr verhindert.

4. Kappsäge nach einen der vorstehenden Ansprüche, **dadurch gekennzeichnet, dass** der Schwenkmechanismus (13) eine Steuerkurve (15) und ein mit der Steuerkurve (15) zusammenwirkendes Steuermittel (16) aufweist, wobei beim Ausführen der Kappbewegung das Steuermittel (16) sich zumindest teilweise entlang der Steuerkurve (15) bewegt, um die Schwenkbewegung der Pendelschutzhaube (12) zu steuern.

5. Kappsäge nach einem der vorstehenden Ansprüche, **dadurch gekennzeichnet, dass** der Schwenkmechanismus (13) einen Steuerhebel (18) aufweist, wobei an dem Steuerhebel (18) die Steuerkurve (15) ausgebildet ist.

6. Kappsäge nach einem der vorstehenden Ansprüche, **dadurch gekennzeichnet, dass** der Steuerhebel (18) gelenkig mit einer Schubstange (20) verbunden ist, wobei die Schubstange (20) funktional wirksam exzentrisch an der Pendelschutzhaube (12) angreift.

7. Kappsäge nach einem der vorstehenden Ansprüche, **dadurch gekennzeichnet, dass** der Schwenkmechanismus (13) eine drehfest zur Sägevorrichtung (5) angeordnete Gelenkbasis (19) aufweist, wobei der Steuerhebel (18) gelenkig mit der Gelenkbasis (19) verbunden ist.

8. Kappsäge nach einem der vorstehenden Ansprüche, **dadurch gekennzeichnet, dass** die Sägevorrichtung (5) schwenkbar an einem Arm (4) angeordnet ist und die Gelenkbasis (19) am Arm (4) abgestützt und/oder angeordnet ist.

9. Kappsäge nach einem der vorstehenden Ansprüche, **dadurch gekennzeichnet, dass** das Riegelelement (14) einen Anschlag (17) für das Zusammenwirken mit dem Steuermittel (16) bereitstellt.

10. Kappsäge nach einem der vorstehenden Ansprüche, **dadurch gekennzeichnet, dass** das Riegelelement (14) schwenkbeweglich am Steuerhebel (18) angeordnet ist und einen Handhabungsbereich (25) aufweist.

11. Kappsäge nach einem der vorstehenden Ansprüche, **dadurch gekennzeichnet, dass** die Gelenkbasis (19) an der Kappachse (6) angeordnet ist.

12. Kappsäge nach einem der vorstehenden Ansprüche, **dadurch gekennzeichnet, dass** eine Schließstellung der Pendelschutzhaube (12) mittels eines Stellmechanismus, insbesondere einer Stellschraube (27) an der Gelenkbasis (19) einstellbar bzw. justierbar ist.

## Claims

1. Circular cross-cut saw, in particular a miter saw, having a supporting table (2) and having a sawing device (5), wherein the sawing device (5) is arranged so as to be pivotable about a cross-cutting axis (6), wherein the sawing device (5) has a saw blade (7) and a displaceable swing guard (12) and a pivoting mechanism (13) is provided, wherein during a cross-cutting movement of the sawing device (5) a rotating and/or pivoting movement of the swing guard (12) is realizable via the pivoting mechanism (13) in such a manner that the swing guard (12) can be opened at least in part by pivoting down the sawing device (5) and can be closed by pivoting up the sawing device (5), wherein, in the lower part of the cross-cutting movement, the swing guard (12) can be opened, in particular fully, preferably by hand or by pressing against or by contact with a workpiece to be cut, which is supported on the supporting table (2) **characterized in that** the pivoting mechanism (13) has a locking element (14), wherein the pivoting mechanism (13) and the locking element (14) are arranged and/or realized in such a manner that in the upper position of the sawing device (5) the swing guard (12), then closed, is locked such that an unintended opening of the swing guard (12) without separately actuating the locking element (14) is prevented, and **in that** automatic unlocking of the swing guard (12) is realized by the pivoting mechanism (13) with the cross-cutting movement, so that, from a certain cross-cutting pivot point, the locking element (14) has no further locking action.

2. Circular cross-cut saw according to Claim 1, **characterized in that** the sawing device (5) is pivotable into an upper, preferably into an uppermost position and, by carrying out the cross-cutting movement, is pivotable into a lower, preferably lowermost position which differs from the upper position.

3. Circular cross-cut saw according to either of the preceding claims, **characterized in that** after carrying out a certain part of the cross-cutting movement of the sawing device (5) from the upper into a lower position, after carrying out the cross-cutting movement of more than 50% of the pivoting region, the locking of the swing guard (12) is automatically lifted on account of the cross-cutting movement already carried out, namely the locking element (14) no longer prevents further opening of the swing guard (12).

4. Circular cross-cut saw according to one of the preceding claims, **characterized in that** the pivoting mechanism (13) has a control cam (15) and a control means (16) that interacts with the control cam (15), wherein when the cross-cutting movement is being carried out, the control means (16) is moved at least partly along the control cam (15) in order to control the pivoting movement of the swing guard (12).

5. Circular cross-cut saw according to one of the preceding claims, **characterized in that** the pivoting mechanism (13) has a control lever (18), wherein the control cam (15) is realized on the control lever (18).

6. Circular cross-cut saw according to one of the preceding claims, **characterized in that** the control lever (18) is pivotally connected to a connecting rod (20), wherein the connecting rod (20) cooperates with the swing guard (12) in an eccentric manner so as to be operatively effective.

7. Circular cross-cut saw according to one of the preceding claims, **characterized in that** the pivoting mechanism (13) has a pivot base (19) arranged non-rotationally with respect to the sawing device (5), wherein the control lever (18) is pivotally connected to the pivot base (19).

8. Circular cross-cut saw according to one of the preceding claims, **characterized in that** the sawing device (5) is arranged so as to be pivotable on an arm (4) and the pivot base (19) is supported and/or arranged on the arm (4).

9. Circular cross-cut saw according to one of the preceding claims, **characterized in that** the locking element (14) provides a stop member (17) for the interacting with the control means (16).

10. Circular cross-cut saw according to one of the preceding claims, **characterized in that** the locking element (14) is arranged so as to be pivotally displaceable on the control lever (18) and has a handling region (25).

11. Circular cross-cut saw according to one of the preceding claims, **characterized in that** the pivot base (19) is arranged on the cross-cutting axis (6).

12. Circular cross-cut saw according to one of the preceding claims, **characterized in that** a closed position of the swing guard (12) is adjustable or readjustable by means of a control mechanism, in particular an adjusting screw (27), on the pivot base (19).

## Revendications

1. Scie pendulaire, en particulier scie pendulaire à onglet, comprenant une table d'appui (2) et un dispositif de sciage (5), le dispositif de sciage (5) étant disposé de manière à pouvoir pivoter autour d'un axe de pendule (6), le dispositif de sciage (5) présentant une lame de scie (7) et un capot de protection de pendule déplaçable (12) et un mécanisme de pivotement (13) étant prévu, un mouvement de rotation et/ou de pivotement du capot de protection de pendule (12) pouvant être réalisé lors d'un mouvement pendulaire du dispositif de sciage (5) par le biais du mécanisme de pivotement (13) de telle sorte que le capot de protection de pendule (12) puisse ouvert fermé au moins en partie par pivotement vers le bas du dispositif de sciage (5) et puisse être fermé par pivotement vers le haut du dispositif de sciage (5), le capot de protection de pendule (12), dans la partie inférieure du mouvement pendulaire, pouvant être ouvert notamment complètement, de préférence à la main ou par pression ou par contact avec une pièce à découper reposant sur la table d'appui (2), **caractérisée en ce que** le mécanisme de pivotement (13) présente un élément de verrou (14), le mécanisme de pivotement (13) et l'élément de verrou (14) étant disposés et/ou réalisés de telle sorte que dans la position supérieure du dispositif de sciage (5), le capot de protection de pendule alors fermé (12) soit verrouillé, de sorte qu'une ouverture accidentelle du capot de protection de pendule (12) sans actionnement séparé de l'élément de verrou (14) soit empêchée et qu'un déverrouillage automatique du capot de protection de pendule (12) soit réalisé par le mécanisme de pivotement (13) avec le mouvement pendulaire, de sorte qu'à partir d'un point de pivotement pendulaire déterminé, l'élément de verrou (14) n'ait plus de fonction de verrouillage.

2. Scie pendulaire selon la revendication 1, **caractérisée en ce que** le dispositif de sciage (5) peut pivoter dans une position supérieure, de préférence dans une position la plus supérieure et, par mise en oeuvre du mouvement pendulaire, peut pivoter dans une position inférieure, de préférence la plus inférieure, s'écartant de la position supérieure.

3. Scie pendulaire selon l'une quelconque des revendications précédentes, **caractérisée en ce qu'**après la mise en oeuvre d'une partie déterminée du mouvement pendulaire du dispositif de sciage (5) de la position supérieure dans une position inférieure, après la mise en oeuvre du mouvement pendulaire sur plus de 50 % de la plage de pivotement, le verrouillage du capot de protection de pendule (12) est automatiquement supprimé sur la base du mouvement pendulaire déjà effectué, à savoir l'élément de verrou (14) n'empêche plus une ouverture supplémentaire du capot de protection de pendule (12).

4. Scie pendulaire selon l'une quelconque des revendications précédentes, **caractérisée en ce que** le mécanisme de pivotement (13) présente une came de commande (15) et un moyen de commande (16) coopérant avec la came de commande (15), le moyen de commande (16), lors de la mise en oeuvre du mouvement pendulaire, se déplaçant au moins en partie le long de la came de commande (15) afin de commander le mouvement de pivotement du capot de protection de pendule (12).

5. Scie pendulaire selon l'une quelconque des revendications précédentes, **caractérisée en ce que** le mécanisme de pivotement (13) présente un levier de commande (18), la came de commande (15) étant réalisée au niveau du levier de commande (18).

6. Scie pendulaire selon l'une quelconque des revendications précédentes, **caractérisée en ce que** le levier de commande (18) est connecté de manière articulée à une tige de poussée (20), la tige de poussée (20) venant en prise fonctionnellement de manière active et excentrique avec le capot de protection de pendule (12).

7. Scie pendulaire selon l'une quelconque des revendications précédentes, **caractérisée en ce que** le mécanisme de pivotement (13) présente une base d'articulation (19) disposée de manière solidaire en rotation par rapport au dispositif de sciage (5), le levier de commande (18) étant connecté de manière articulée à la base d'articulation (19).

8. Scie pendulaire selon l'une quelconque des revendications précédentes, **caractérisée en ce que** le dispositif de sciage (5) est disposé de manière à pouvoir pivoter au niveau d'un bras (4) et la base d'articulation (19) est supportée et/ou disposée au niveau du bras (4).

9. Scie pendulaire selon l'une quelconque des revendications précédentes, **caractérisée en ce que** l'élément de verrou (14) fournit une butée (17) pour coopérer avec le moyen de commande (16).

10. Scie pendulaire selon l'une quelconque des revendications précédentes, **caractérisé en ce que** l'élément de verrou (14) est disposé de manière déplaçable par pivotement sur le levier de commande (18) et présente une région de manipulation (25).

11. Scie pendulaire selon l'une quelconque des revendications précédentes, **caractérisée en ce que** la base d'articulation (19) est disposée sur l'axe de pendule (6).

12. Scie pendulaire selon l'une quelconque des revendications précédentes, **caractérisée en ce qu'**une position de fermeture du capot de protection de pendule (12) peut être ajustée ou réglée au moyen d'un mécanisme de réglage, en particulier d'une vis de réglage (27) sur la base d'articulation (19).
